(19)

Europäisches Patentamt
European Patent Office
Office européen des brevets

(11) **EP 3 792 230 A1**

(12) **EUROPEAN PATENT APPLICATION**

(43) Date of publication:
**17.03.2021 Bulletin 2021/11**

(51) Int Cl.:
**C04B 28/04** (2006.01)   **C04B 40/00** (2006.01)
**C04B 24/38** (2006.01)

(21) Application number: **19196798.3**

(22) Date of filing: **11.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Clariant Produkte (Deutschland) GmbH 65929 Frankfurt am Main (DE)**

(72) Inventors:
• **PITARCH LÓPEZ, Jesús 60431 Frankfurt am Main (DE)**

• **LOEW, Sebastian 81925 München (DE)**
• **JIRAN, Sarah 82256 Fürstenfeldbruck (DE)**
• **LIST, Felix 81476 Munich (DE)**
• **PARSA, Edris 81539 Munich (DE)**

(74) Representative: **Graser, Konstanze Clariant Produkte (Deutschland) GmbH IPM / Patent & License Management Arabellastrasse 4a 81925 München (DE)**

(54) **BIOPOLYMER CEMENT ADDITIVE**

(57)    The present invention is directed to a biopolymer cement additive, a biopolymer cement composition containing the additive, the use of the additive for the production of, mortar or concrete and a process for the preparation of concrete or mortar implementing the biopolymer cement additive.

EP 3 792 230 A1

**Description**

The present invention is directed to a biopolymer cement additive, a biopolymer cement composition containing the additive, the use of the additive for the production of, mortar or concrete and a process for the preparation of concrete or mortar implementing the biopolymer cement additive.

Cement is a building material with a long history and was used for hundreds of years for the preparation of mortar and concrete. For many decades the handling and setting properties of simple mixtures of cement, sand (and/or gravel) and water were sufficient for the majority of building and construction projects. However, with increasing diversity of building techniques and global applicability requests this has changed dramatically since the end of the last century. Since then, it was a continuous desire of the industry to improve mortar and concrete compositions to enhance specific end-user performance requirements. For example, EP 2882804 describes a composition of redispersible polymer powders and dry-mix formulations of cement containing the redispersible polymer powders, which allow a longer quick open time in order to increase the working time of a fresh cement mixture.

For example, in many modern and large-scale applications it is important to utilize a highly fluid concrete/mortar mix to facilitate pumping, distribution and application of the concrete/mortar even over long distances and heights. However, once the concrete/mortar is applied, a fast recovery of a high viscosity is desired to guarantee excellent stability, uniform distribution and dispersion of the material. Further, a high homogeneity of the concrete/mortar mix is favorable to achieve high quality standards of the final hardened product.

At the same time, it is desirable to maintain the characteristics of the current and officially certified concrete and cement formulations. This is important to keep costs down due to dramatically changing product properties which can require extensive testing and obtaining of new qualifications to confirm industry standards are still met.

In addition, with increasing demand of sustainable and so called "green" compounds it is of importance that any new additive applied is free of contaminants and based on renewable resources. Yet another aspect is the necessity to use a minimal amount of water within the concrete or mortar mixture as - on the one hand - water is a precious resource in many countries and - on the other hand - any water not used within the chemical reaction with the cement has to be removed by drying. This makes the whole process not only more expensive but also diminishes the quality of the final concrete product due to formation of larger pores which makes it prone to weathering and negatively affects stability.

The inventors of the present invention have therefore set themselves the task to provide an additive which allows pumping and application of the fresh (aqueous) concrete or mortar mixture with a minimum amount of water but at the same time does not negatively affect the stability during and after application of the mixture. Further, the additive should be of renewable resources and free of any compounds which negatively affect the environment and health. In addition, the characteristics of the final dried concrete or mortar product should still fulfill the requested industry standards such as compressive strength.

The inventors of the present invention have solved these tasks with the provision of a biopolymer cement additive which allows a spread increase of at least 20% when admixed to a concrete or mortar product comprising a beta-glucan with a molecular weight distribution with a maximum of from 0.1 to 5.0 Million Dalton (MegaDalton).

The inventive biopolymer cement additive (in the following also "inventive additive") allows excellent dispersion and distribution of the fresh (aqueous) concrete or mortar product as it allows to control not only the flow but also segregation and sedimentation of the product. This is of particular advantage when the inventive additive is used for highly fluid and technically demanding systems such as self-consolidating or self-compacting concretes and self-levelling mortars and grouts.

Further, the inventive additive can be flexibly used either in a dry form e.g. as a powder already contained in the dry cement mixture or custom-optimized admixed to the concrete or mortar as it easily re-hydrates in the water of the concrete mix, developing pseudoplastic rheology and high low shear rate viscosity as well as excellent suspension properties. In addition, the inventive additive can be provided and applied in a liquid formulation which facilitates dosing as use levels in the final concrete mix are very low at around 0.001 wt.-%.

Within the present invention the term "biopolymer cement additive" is to be understood as any additive suitable biopolymer composition which allows a spread increase of at least 20% when admixed to a concrete or mortar product and which comprises at least one beta-glucan with a molecular weight distribution with a maximum of from 0.5 to 5.0 Million Dalton (MegaDalton).

Within the present invention the term "beta-glucan" is to be understood as referring to any $\beta$-D-glucose polysaccharide characterized by the formation of a linear backbone with 1-3 $\beta$-glycosidic bonds. According to the present invention, in addition, the beta-glucan has to have a molecular weight distribution with a maximum of from 0.1 to 5.0 Million Dalton (MegaDalton) or from 0.5 to 3.5 Million Dalton (MegaDalton) or from 1.0 to 2.0 Million Dalton (MegaDalton).

Within an exemplary embodiment of the present invention, the beta-glucan has a shear thinning behavior described by a constant *b* in which *b* is the gradient between two pairs of values *x1/y1* and *x2/y2* where *x* is the shear rate [s$^{-1}$] in the range of 0.1-100 s$^{-1}$ and *y* is the dynamic viscosity [mPas] at the given shear rate and at a temperature of the beta-glucan between 20°C and 80°C and a concentration between 0.05 and 0.5 wt.-%. The constant $b$ can be described by the formula b= -((lg(y1/y2)/(lg(x1/x2)). Within a further suitable but exemplary embodiment b is selected from the range of from 0.65 to 1.05. Within another exemplary embodiment $b$ is selected from the range of from 0.7 to 1.0. Within another exemplary embodiment $b$ is selected from the range of from 0.75 to 0.9.

Beta-glucans particularly suitable for the present invention are defined within EP 2018165787 which is herein incorporated by reference.

According to a particularly suitable embodiment of the present invention, the beta-glucan has been produced by a fungus belonging to the genus *Aureobasidium* such as *Aureobasidium pullulans* also referred to as *Aureobasidium oleae, Azymocandida malicola, Candida malicola, Cladosporium pullulans, Dematium pullulans, Exobasidium vitis, Hormonema oleae, Hormonema pullulans, Pullularia fermentans, Pullularia fermentans var. schoenii, Pullularia pullulans, Torula oleae* or *Torula schoenii.* All of which are to be understood as synonyms.

Within the present inventio the term "spread increase" is determined by the following formula:

$$\textit{Spread increase} = [(\textit{Spread after shaking} - \textit{Spread before shaking})/(\textit{Spread before shaking})] \times 100.$$

The parameter of the spread increase is thereby a measure to show the presence of two important characteristics of the cement or mortar product, namely the stability without any shearing forces applied and the viscosity increase as soon as shearing forces (e.g. by pumping) are applied leading to the above mentioned advantages over the prior art. The "spread" is thereby measured as defined within the example section below. The parameter "spread before shaking" defines the stabilizing effect of the additives providing an anti-settle effect a lower proneness for unwanted foam formation and a significantly improved self-compacting behavior. Whereas a high delta of the two measurements *"Spread after shaking - Spread before shaking"* show the improved workability, lowered tendency for blockage and decreased energy consumption while pumping. These parameters combined in the formula listed above yield the overall performance named spread increase. Within the present invention, the spread increase is at least 20%, wherein a spread increase of from 20 to 60% or from 22 to 50% or from 25 to 48 % or from 30 to 45 % is also within the scope of the present invention.

Within the present invention the term "cement" refers to any substance which can be used to bind other substances such as sand, rocks and/or gravel together and is well known to a person skilled in the art. Cement types particularly suitable for the present invention are known to a person skilled in the art as Geopolymer cement and Portland Cement. Cement mixed with fine aggregate produces mortar for masonry, or with sand and gravel, produces concrete. Cement particularly suitable for the present invention is an inorganic substance, wherein lime or calcium silicate based inorganic substances are particularly suitable and can be divided in non-hydraulic and hydraulic cement.

Non-hydraulic cement does not set in wet conditions or under water but during drying and under reaction with carbon dioxide. It is resistant to attack by chemicals after setting.

Hydraulic cements (e.g., Portland cement) sets due to a chemical reaction between the dry ingredients and water. The chemical reaction results in mineral hydrates that are not very water-soluble and so are quite durable in water and safe from chemical attack. This allows setting in wet conditions or under water and further protects the hardened material from chemical attack.

According to the present invention, the term "concrete" is well known to a person skilled in the art and to be understood as a mixture of sand, cement, and water as well as rock chippings or gravel.

According to the present invention, the term "mortar" is well known to a person skilled in the art and to be understood a thick mixture of water, sand and cement. The water is used to hydrate the cement and hold the mix together. The water to cement ratio is higher in mortar than in concrete in order to form its bonding element. When mixed, it is a much thicker substance than concrete.

Within a particularly suitable embodiment of the present invention, the biopolymer cement additive is a dry composition and further contains from 10 to 80 wt.-% melanin, wherein amounts from 12 to 75 wt.-%, from 15 to 65 wt.-% and from 20 to 50 wt.-% are also suitable. The term "melanin" is well known to a person skilled in the art. Within the present invention the term "melanin" comprises any compound which can be classified as eumelanin, pheomelanin or neuromelanin. Melanin particularly suitable for the present invention can be defined by the chemical formula of melanin is $C_{18}H_{10}N_2O_4$.

Within another alternative embodiment of the present invention, the biopolymer cement additive is a liquid formulation containing from 85 to 99.9 wt.-% water and from 0.1 to 15 wt.-% of the beta-glucan as defined above. Also suitable liquid formulations contain from 88 to 99.9 wt.-%, from 90 to 99 wt.-% or from 92 to 98 wt.-% water and from 0.1 to 12 wt.-%, from 0.5 to 5 wt.-% or from 1 to 3 wt.-% of the beta-glucan as defined above. Particularly suitable liquid formulations contain from 90 to 99.9 wt.-% water and from 0.1 to 10 wt.-% of the beta-glucan as defined above.

Within a particularly suitable embodiment, the liquid formulation further contains from 0.05 to 30 g/l melanin, wherein a melanin content of from 0.05 to 15 g/l, from 0.07 to 7 g/l or from 0.1 to 6 g/l is also suitable.

Within another particularly suitable embodiment, the pH value of the liquid formulation is selected from the range of from pH 2 to pH 8, wherein a pH of from 3.5 to 6 or from 4 to 5.5 is also suitable.

Within another particularly suitable embodiment, the liquid formulation further contains one or more metal ions selected from the group consisting of Al3+, Fe3+, Ca2+, Mg2+ and Mn2+ in a concentration of from 1 to 100 mmol, wherein a concentration of from 1 to 90 mmol, from 5 to 89 mmol, from 5 to 85 mmol or from 10 to 80 mmol is also suitable.

Within another particular suitable embodiment, the liquid formulation comprises or is consisting of supernatant of a fermented medium. A particularly suitable supernatant is a medium fermented by at least one filamentous fungus such as a fungus belonging to the genus of *Trichoderma* or *Aureobasidium*.

Within another aspect, the present invention relates to a biopolymer cement composition containing the biopolymer cement additive in dry form as defined before.

Within a particularly suitable embodiment of the present inventio the biopolymer cement composition further contains from 20mg to 500mg $KAl(SO_4)_2 \cdot 12H_2O$, wherein from 30 to 400mg, from 40 to 350mg and from 50 to 300 mg are also suitable. Within another particularly suitable embodiment of the present invention the biopolymer cement composition contains from 0.001 to 0.1 wt.-% (weight $KAl(SO_4)_2 \cdot 12H_2O$ to weight biopolymer cement composition) $KAl(SO_4)_2 \cdot 12H_2O$, wherein from 0.01 to 0.2 wt.-% or from 0.015 to 0.1 wt.-% are also suitable.

Within a particularly suitable embodiment of the inventive biopolymer cement composition, the cement is hydraulic or non-hydraulic cement, wherein Portland cement is even more suitable.

Within other suitable embodiments of the biopolymer cement composition, the composition further contains at least one component selected from the group consisting of fillers such as silica sand, quartz sand, quartz flour, calcium carbonate, dolomite, aluminum silicates, talc or mica, or light weight fillers such as pumice, foamed glass, aerated concrete, perlites or vermiculites; alkali metal hydroxides and/or alkaline earth metal hydroxides such as zinc oxide, zinc hydroxide and zinc hydroxide carbonate; accelerators such as lithium carbonate or tartaric acid; defoamers; liquefiers; dispersants; or mixtures thereof. Suitable amounts of fillers are selected from the range of from 0.1 to 20 wt.-% (weight filler to weight cement) or from 0.5 to 10 wt.-%.

Within a particularly suitable embodiment of the inventive biopolymer cement composition, the biopolymer cement composition contains from 0.0005 to 0.1 wt.-% of the biopolymer cement additive as defined above, wherein from 0.001 to 0.1 wt.-%, from 0.005 to 0.1 wt.-% from 0.005 to 0.2 wt.-%, from 0.009 to 0.25 or from 0.01 to 0.35 wt.-% are also suitable.

Within another particularly suitable embodiment of the inventive biopolymer cement composition, the composition contains from 0.0005 to 5 wt.-% of a clay mineral, wherein from 0.001 to 4 wt.-%, from 0.005 to 3 wt.-%, from 0.009 to 2.5 wt.-%, from 0.01 to 2.0 wt.-% or from 0.05 to 1.8 wt.-% are also suitable.

Within another particularly suitable embodiment of the inventive biopolymer cement composition, the composition contains from 0.0005 to 0.005 wt.-% of the biopolymer cement additive as defined above as well as from 0.0005 to 0.005 wt.-% of a clay mineral selected from sheet silicates such as smectites such as bentonites, saponites or smectites which are particularly suitable selected from the group consisting of halloysite ($Al_2Si_2O_5(OH)_4$), kaolinite ($Al_2Si_2O_5(OH)_4$), illite ($(K,H_3O)(Al,Mg,Fe)_2(Si,Al)_4O_{10}[(OH)_2,(H2O)]$), montmorillonite ($(Na,Ca)_{0.33}(Al,Mg)_2Si_4O_{10}(OH)_2 \cdot nH_2O$), vermiculite ($(MgFe,Al)_3(Al,Si)_4O_{10}(OH)_2 \cdot 4H_2O$), talc ($Mg_3Si_4O_{10}(OH)_2$), sepiolite ($Mg_4Si_6O_{15}(OH)_2 \cdot 6H_2O$), attapulgite ($(Mg,Al)_2Si_4O_{10}(OH) \cdot 4(H_2O)$), pyrophyllite ($Al_2Si_4O_{10}(OH)_2$) and mixtures thereof. It is thereby particularly suitable that the ratio of the concentration of the biopolymer cement additive to the concentration of the clay mineral is selected from the range of from 1:9 to 9:1 and wherein the total concentration of the biopolymer cement additive and the clay mineral within the biopolymer cement composition is from 0.0005% to 0.1 wt.-%. Further suitable ratios are from 1:8 to 8:1 and further total concentrations of the of the biopolymer cement additive and the clay mineral within the biopolymer cement composition are from 0.0008% to 0.5 wt.-% or from 0.001 to 0.25 wt.-%.

Within another aspect, the present invention relates to a process for the production of concrete or mortar comprising the steps

(a) providing from 100 to 10000kg sand and/or gravel, wherein from 100 to 800kg or from 200 to 750 kg are also suitable;

(b) addition of from 2.5 to 40 wt.-% (weight of cement to weight sand and/or gravel) cement to the sand and/or gravel, wherein from 2.5 to 20 wt.-% or from 5 to 15 wt.-% are also suitable;

(c) addition of from 3 to 20 wt.-% (weight of water to total weight of sand and/or gravel and cement) of water to the sand and/or gravel; and cement, wherein from 3 to 15 wt.-% or from 5 to 12 wt.-% are also suitable;

(d) addition of from 0.001 to 0.1 wt.-% (weight of biopolymer to total weight of water, sand and/or gravel and cement) of the biopolymer cement additive in liquid form as defined above; to the sand and/or gravel; cement and water, wherein from 0.001 to 0.5 wt.-%, from 0.005 to 0.5 wt.-% or from 0.01 to 0.25 wt.-% are also suitable;

(e) mixing components (a) to (d) for a time period of from 5 minutes to 5 hours, wherein from 5 minutes to 4 hours, from 10 minutes to 3 hours or from 15 minutes to 2 hours are also suitable.

Within a particularly suitable embodiment, from 0.001 to 0.1 wt.-% (weight $KAl(SO_4)_2 x12H_2O$ to weight sand and/or gravel) $KAl(SO_4)_2 x12H_2O$ are added to the mixture before or after carrying out step (c) but after step (a), wherein it is particularly suitable to add the $KAl(SO_4)_2 x12H_2O$ before step (c) but after step (b). Within another suitable embodiment the 0.001 to 0.1 wt.-% $KAl(SO_4)_2 x12H_2O$ may be added in form of an aqueous solution with a concentration of from 0.01 to 0.5 wt.-% ($KAl(SO_4)_2 x12H_2O$ to weight aqueous solution), wherein a concentration of from 0.05 to 0.3 wt.-% or from 0.1 to 0.25 wt.-% is also suitable.

Within another aspect, the present invention relates to a process for the production of concrete or mortar comprising the steps

(a) providing from 100 to 10000kg sand and/or gravel, wherein from 100 to 800kg or from 200 to 750 kg are also suitable;

(b) addition of from 2.5 to 40 wt.-% of the biopolymer cement composition as defined above to the sand and/or gravel, wherein from 2.5 to 20 wt.-% or from 5 to 15 wt.-% are also suitable;

(c) addition of from 3 to 20 wt.-% of water to the sand and/or gravel; and biopolymer cement composition, wherein from 3 to 15 wt.-% or from 5 to 12 wt.-% are also suitable;

(d) mixing components (a) to (d) for 5 minutes to 5 hours.

Within a particularly suitable embodiment, from 0.001 to 0.1 wt.-% (weight $KAl(SO_4)_2 x12H_2O$ to weight sand and/or gravel) $KAl(SO_4)_2 x12H_2O$ are already contained within the biopolymer cement composition or alternatively added to the mixture before or after carrying out step (c) but after step (a), wherein it is particularly suitable to add the $KAl(SO_4)_2 x12H_2O$ before step (c) but after step (b). Within another suitable embodiment the 0.001 to 0.1 wt.-% $KAl(SO_4)_2 x12H_2O$ may be added in form of an aqueous solution with a concentration of from 0.01 to 0.5 wt.-% ($KAl(SO_4)_2 x12H_2O$ to weight aqueous solution), wherein a concentration of from 0.05 to 0.3 wt.-% or from 0.1 to 0.25 wt.-% is also suitable.

Within another aspect, the present invention relates to a process for the production of concrete or mortar comprising the steps

(a) providing from 100 to 10000kg sand and/or gravel, wherein from 100 to 800kg or from 200 to 750 kg are also suitable;

(b) addition of from 2.5 to 40 wt.-% cement to the sand and/or gravel, wherein from 2.5 to 20 wt.-% or from 5 to 15 wt.-% are also suitable;

(c) addition of from 0.00001 to 0.001 wt.-% of the biopolymer cement additive in dry form as defined above; to the sand and/or gravel; and cement wherein from 0.001 to 0.5 wt.-%, from 0.005 to 0.5 wt.-% or from 0.01 to 0.25 wt.-% are also suitable;

(d) addition of from 3 to 20 wt.-% of water to the sand and/or gravel, cement and biopolymer cement additive, wherein from 3 to 15 wt.-% or from 5 to 12 wt.-% are also suitable;

(e) mixing components (a) to (d) for a time period of from 5 minutes to 5 hours.

Within a particularly suitable embodiment, from 0.001 to 0.1 wt.-% (weight $KAl(SO_4)_2 x12H_2O$ to weight sand and/or gravel) $KAl(SO_4)_2 x12H_2O$ are added to the mixture before or after carrying out step (d) but after step (a), wherein it is particularly suitable to add the $KAl(SO_4)_2 x12H_2O$ before step (d) but after step (c). Within another suitable embodiment the 0.001 to 0.1 wt.-% $KAl(SO_4)_2 x12H_2O$ may be added in form of an aqueous solution with a concentration of from 0.01 to 0.5 wt.-% ($KAl(SO_4)_2 x12H_2O$ to weight aqueous solution), wherein a concentration of from 0.05 to 0.3 wt.-% or from 0.1 to 0.25 wt.-% is also suitable.

Within a further aspect the present inventio relates to the use of the biopolymer cement additive as defined above for the production of a biopolymer cement composition or the production of concrete or mortar.

In the following particularly preferred embodiments of the inventive process are described which are not to be understood as limiting the invention in any respect. It is to be understood that irrespective of the following particularly preferred embodiments any combination of the features as defined before is within the scope of the present invention.

**Particularly preferred embodiment 1**

Biopolymer cement additive which allows a spread increase of at least 20% when admixed to a concrete or mortar product comprising a beta-glucan with a molecular weight distribution with a maximum of from 0.5 to 3.5 Million Dalton (MegaDalton), wherein the beta-glucan has been produced by a fungus belonging to the genus *Aureobasidium*.

**Particularly preferred embodiment 2**

Biopolymer cement additive according to particularly preferred embodiment 1, wherein the biopolymer cement additive is a dry composition and further contains from 12 to 75 wt.-% melanin.

**Particularly preferred embodiment 3**

Biopolymer cement additive which allows a spread increase of at least 20% when admixed to a concrete or mortar product comprising a beta-glucan with a molecular weight distribution with a maximum of from 0.5 to 3.5 Million Dalton (MegaDalton), wherein the beta-glucan has been produced by a fungus belonging to the genus *Aureobasidium* the and wherein the biopolymer cement additive is a liquid formulation containing from 85 to 99.9 wt.-% water and from 0.1 to 15 wt.-% of the beta-glucan.

**Particularly preferred embodiment 4**

Biopolymer cement additive according to particularly preferred embodiment 3, wherein the biopolymer cement additive is a liquid formulation comprising or consisting of supernatant of a fermented medium such as a medium fermented by at least one filamentous fungus such as a fungus belonging to the genus of *Trichoderma* or *Aureobasidium*.

**Particularly preferred embodiment 5**

Biopolymer cement additive according to particularly preferred embodiment 4, wherein the liquid formulation contains from 0.05 to 10 g/l melanin.

**Particularly preferred embodiment 6**

Biopolymer cement composition containing a biopolymer cement additive as defined in particularly preferred embodiment 1 or 2, wherein the cement is a hydraulic or non-hydraulic cement and wherein the biopolymer cement additive is present within the biopolymer cement composition in a concentration of from 0.0005 to 0.1 wt.-% (weight biopolymer cement additive to weight biopolymer cement composition).

**Particularly preferred embodiment 7**

Biopolymer cement composition according to particularly preferred embodiment 6, wherein the biopolymer cement composition contains from 0.001 to 0.1 wt.-%, wt.-% of a clay mineral selected from sheet silicates such as smectites such as bentonites, saponites or smectites selected from the group consisting of halloysite ($Al_2Si_2O_5(OH)_4$), kaolinite ($Al_2Si_2O_5(OH)_4$), illite (($K,H_3O)(Al,Mg,Fe)_2(Si,Al)_4O_{10}[(OH)_2,(H2O)]$)), montmorillonite (($Na,Ca)_{0.33}(Al,Mg)_2Si_4O_{10}(OH)_2 \cdot nH_2O$), vermiculite (($MgFe,Al)_3(Al,Si)_4O_{10}(OH)_2 \cdot 4H_2O$), talc ($Mg_3Si_4O_{10}(OH)_2$), sepiolite ($Mg_4Si_6O_{15}(OH)_2 \cdot 6H_2O$), attapulgite (($Mg,Al)_2Si_4O_{10}(OH) \cdot 4(H_2O)$)), pyrophyllite ($Al_2Si_4O_{10}(OH)_2$) and mixtures thereof.

**Particularly preferred embodiment 8**

Biopolymer cement composition according to particularly preferred embodiment 6 or 7, wherein the biopolymer cement composition contains from 0.001 to 0.1 wt.-% (weight $KAl(SO_4)_2 \times 12H_2O$ to weight biopolymer cement composition) $KAl(SO_4)_2 \times 12H_2O$.

**Particularly preferred embodiment 9**

Process for the production of concrete or mortar comprising the steps

(a) providing from 100 to 10000kg sand and/or gravel;

(b) addition of from 2.5 to 40 wt.-% (weight of cement to weight sand and/or gravel) cement to the sand and/or gravel;

(c) addition of from 3 to 20 wt.-% (weight of water to total weight of sand and/or gravel and cement) of water to the sand and/or gravel; and cement;

(d) addition of from 0.001 to 0.1 wt.-% (weight of biopolymer to total weight of water, sand and/or gravel and cement) of the biopolymer cement additive in liquid form as defined in any of particularly preferred embodiment 3 to 5; to the sand and/or gravel; cement and water;

(e) mixing components (a) to (d) for a time period of from 5 minutes to 5 hours;
wherein from 0.001 to 0.1 wt.-% (weight $KAl(SO_4)_2 \times 12H_2O$ to weight sand and/or gravel) $KAl(SO_4)_2 \times 12H_2O$ are added in a dry form to the mixture after carrying out step (c) or wherein from 0.001 to 0.1 wt.-% $KAl(SO_4)_2 \times 12H_2O$ may be added in form of an aqueous solution with a concentration of from 0.01 to 0.5 wt.-% ($KAl(SO_4)_2 \times 12H_2O$ to weight aqueous solution).

**Particularly preferred embodiment 10**

Process for the production of concrete or mortar according to particularly preferred embodiment 8, wherein from 0.001 to 0.1 wt.-% (weight clay mineral to weight concrete) of a clay mineral selected from sheet silicates selected from the group consisting of halloysite ($Al_2Si_2O_5(OH)_4$), kaolinite ($Al_2Si_2O_5(OH)_4$), illite ($(K,H_3O)(Al,Mg,Fe)_2(Si,Al)_4O_{10}[(OH)_2,(H2O)]$), montmorillonite ($(Na,Ca)_{0.33}(Al,Mg)_2Si_4O_{10}(OH)_2 \cdot nH_2O$), vermiculite ($(MgFe,Al)_3(Al,Si)_4O_{10}(OH)_2 \cdot 4H_2O$), talc ($Mg_3Si_4O_{10}(OH)_2$), sepiolite ($Mg_4Si_6O_{15}(OH)_2 \cdot 6H_2O$), attapulgite ($(Mg,Al)_2Si_4O_{10}(OH) \cdot_4(H_2O)$), pyrophyllite ($Al_2Si_4O_{10}(OH)_2$) and mixtures thereof are added to the mixture before step (c) of the process is carried out.

**Particularly preferred embodiment 11**

Process for the production of concrete or mortar comprising the steps

(a) providing from 100 to 10000kg sand and/or gravel;

(b) addition of from 2.5 to 40 wt.-% of the biopolymer cement composition as defined in any of particularly preferred embodiments 6 to 8;

(c) addition of from 3 to 20 wt.-% of water to the sand and/or gravel; and biopolymer cement composition;

(d) mixing components (a) to (d) for 5 minutes to 5 hours,
and wherein - in case the biopolymer cement composition does not already contain $KAl(SO_4)_2 \times 12H_2O$ - from 0.001 to 0.1 wt.-% (weight $KAl(SO_4)_2 \times 12H_2O$ to weight sand and/or gravel) $KAl(SO_4)_2 \times 12H_2O$ are added in a dry form to the mixture after carrying out step (a) or (b) but before step (c) or wherein from 0.001 to 0.1 wt.-% $KAl(SO_4)_2 \times 12H_2O$ may be added in form of an aqueous solution with a concentration of from 0.01 to 0.5 wt.-% ($KAl(SO_4)_2 \times 12H_2O$ to weight aqueous solution) before or after step (c) of the process
and/or wherein - in case the biopolymer cement composition does not already contain $KAl(SO_4)_2 \times 12H_2O$ from 0.001 to 0.1 wt.-% (weight clay mineral to weight concrete) of a clay mineral selected from sheet silicates such as smectites such as bentonites, saponites or smectites selected from the group consisting of halloysite ($Al_2Si_2O_5(OH)_4$), kaolinite ($Al_2Si_2O_5(OH)_4$), illite ($(K,H_3O)(Al,Mg,Fe)_2(Si,Al)_4O_{10}[(OH)_2,(H2O)]$), montmorillonite ($(Na,Ca)_{0.33}(Al,Mg)_2Si_4O_{10}(OH)_2 \cdot nH_2O$), vermiculite ($(MgFe,Al)_3(Al,Si)_4O_{10}(OH)_2 \cdot 4H_2O$), talc ($Mg_3Si_4O_{10}(OH)_2$), sepiolite ($Mg_4Si_6O_{15}(OH)_2 \cdot 6H_2O$), attapulgite ($(Mg,Al)_2Si_4O_{10}(OH) \cdot 4(H_2O)$), pyrophyllite ($Al_2Si_4O_{10}(OH)_2$) and mixtures thereof are added to the mixture after carrying out step (a) or (b) but before step (c) of the process is carried out.

**Particularly preferred embodiment 12**

Process for the production of concrete or mortar comprising the steps

(a) providing from 100 to 10000kg sand and/or gravel;

(b) addition of from 2.5 to 40 wt.-% cement to the sand and/or gravel;

(c) addition of from 0.00001 to 0.001 wt.-% of the biopolymer cement additive as defined in any of particularly preferred embodiments 1 or 2 to the sand and/or gravel; and cement;

(d) addition of from 3 to 20 wt.-% of water to the sand and/or gravel; cement and biopolymer cement additive;

(e) mixing components (a) to (d) for a time period of from 5 minutes to 5 hours;

wherein from 0.001 to 0.1 wt.-% (weight $KAl(SO_4)_2 x12H_2O$ to weight sand and/or gravel) $KAl(SO_4)_2 x12H_2O$ are added in a dry form to the mixture before carrying out step (d); or wherein from 0.001 to 0.1 wt.-% $KAl(SO_4)_2 x12H_2O$ may be added in form of an aqueous solution with a concentration of from 0.01 to 0.5 wt.-% ($KAl(SO_4)_2 x12H_2O$ to weight aqueous solution before or after carrying out step (d) but before carrying out step (e).

**Particularly preferred embodiment 13**

Process for the production of concrete or mortar according to particularly preferred embodiment 12, wherein from 0.001 to 0.1 wt.-% (weight clay mineral to weight concrete) of a clay mineral selected from sheet silicates such as smectites such as bentonites, saponites or smectites selected from the group consisting of halloysite ($Al_2Si_2O_5(OH)_4$), kaolinite ($Al_2Si_2O_5(OH)_4$), illite (($K,H_3O)(Al,Mg,Fe)_2(Si,Al)_4O_{10}[(OH)_2,(H2O)]$)), montmorillonite (($Na,Ca)_{0.33}(Al,Mg)_2Si_4O_{10}(OH)_2 \cdot nH_2O$), vermiculite (($MgFe,Al)_3(Al,Si)_4O_{10}(OH)_2 \cdot 4H_2O$), talc ($Mg_3Si_4O_{10}(OH)_2$), sepiolite ($Mg_4Si_6O_{15}(OH)_2 \cdot 6H_2O$), attapulgite (($Mg,Al)_2Si_4O_{10}(OH) \cdot 4(H_2O)$), pyrophyllite ($Al_2Si_4O_{10}(OH)2$) and mixtures thereof are added to the mixture before step (d) of the process is carried out.

**Particularly preferred embodiment 14**

Use of the biopolymer cement additive as defined in any of particularly preferred embodiments 1 or 2 for the production of a biopolymer cement composition as defined in any of particularly preferred embodiments 6 to 8, or the production of concrete or mortar as defined in any of particularly preferred embodiments 9 to 13.

**Examples**

The present invention is now described by the following examples and figures. The examples and figures are for illustrative purposes only and are not to be understood as limiting the invention.

List of Figures

Fig. 1 shows the spread before shaking and spread after shaking as measured during example 1

Fig. 2 shows the spread increase as measured during example 1

Materials

Table 1.1: Biopolymer cement compositions

|  | Mix 1 | Mix 2 | Mix 3 | Mix 4 | Mix 5 | Mix 6 | Mix 7 | Mix 8 |
|---|---|---|---|---|---|---|---|---|
| Sand | 1350 g | 1350 g | 1350 g | 1350 g | 1350 g | 1350 g | 1350 g | 1350 g |

(continued)

| | Mix 1 | Mix 2 | Mix 3 | Mix 4 | Mix 5 | Mix 6 | Mix 7 | Mix 8 |
|---|---|---|---|---|---|---|---|---|
| Cement | 540 g | 540 g | 540 g | 540 g | 540 g | 540 g | 540 g | 540 g |
| Water | 216.5 g | 216.5 g | 216.5 g | 216.5 g | 216.5 g | 216.5 g | 216.5 g | 216.5 g |
| Liquefier | 2.6 g | 2.6 g | 2.6 g | 2.6 g | 2.6 g | 2.6 g | 2.6 g | 2.6 g |
| Rehydrated biopolymer cement additive dry composition with 0.5 wt.-% beta glucan | | 6 g | | | | | | |
| Biopolymer cement additive containing 0.5 wt.-% beta glucan | | | 6g | | | | | |
| Biopolymer cement additive containing 0.5 wt.-% beta glucan and 0.6 wt.-% melanin | | | | 6g | | | | |
| 5 g/l rehydrated Kelco-Crete | | | | | 6 g | | | |
| 5 g/l rehydrated Xanthan | | | | | | 6 g | | |
| Actigum CS6 | | | | | | | 6 g | |
| Ceratofix XXMG | | | | | | | | 6 g |

Table 1.2: Mortar compositions cont.

| | Mix 9 | Mix 10 | Mix 11 | Mix 12 | Mix 13 | Mix 14 |
|---|---|---|---|---|---|---|
| Sand | 1350 g | 1350 g | 1350 g | 1350 g | 1350 g | 1350 g |
| Cement | 540 g | 540 g | 540 g | 540 g | 540 g | 540 g |
| Water | 216.5 g | 216.5 g | 216.5 g | 216.5 g | 216.5 g | 211.5 g |
| Liquefier | 2.6 g | 2.6 g | 2.6 g | 2.6 g | 2.6 g | 2.6 g |
| Bentone EW | 6g | | | | | |
| Biopolymer cement additive containing 0.5 wt.-% beta glucan | | 3g | 3g | 6g | 6g | 6g |
| Bentone EW | | | 3g | 6g | | |
| Potassium alum | | | | | 0.1 g | |
| Potassium alum dissolved in 4.9 g water | | | | | | 0.1 g |

Table 2: Standard sand size distribution

| mesh | Sieve transition in Mass percent |
|---|---|
| 4.0 | 100 |
| 2.0 | 90-100 |
| 1.0 | 60-90 |
| 0.5 | 40-75 |
| 0.25 | 25-50 |
| 0.125 | 10-30 |
| 0.063 | 0-10 |

The added water was demineralized water.

The cement was of the type CEM II/A-S 32,5 purchased from Schwenk.

The liquefier was Conpaq 149s purchased from Peramin.

Potassium alum is Aluminium potassium sulfate dodecahydrate ($KAl(SO_4)_2 x12H_2O$) and was purchased from Sigma-Aldrich.

Xanthan was purchased from Sigma-Aldrich

Ceratofix XXMG (montmorrilonite clay mineral product) was purchased from Clariant and Bentone EW (saponite clay mineral product) was purchased from Elementis.

Potassium alum was purchased from Sigma-Aldrich.

All solid additives were rehydrated by vigorous stirring for 1 h and subsequent storage at 40 °C for 16 h.

Example 1

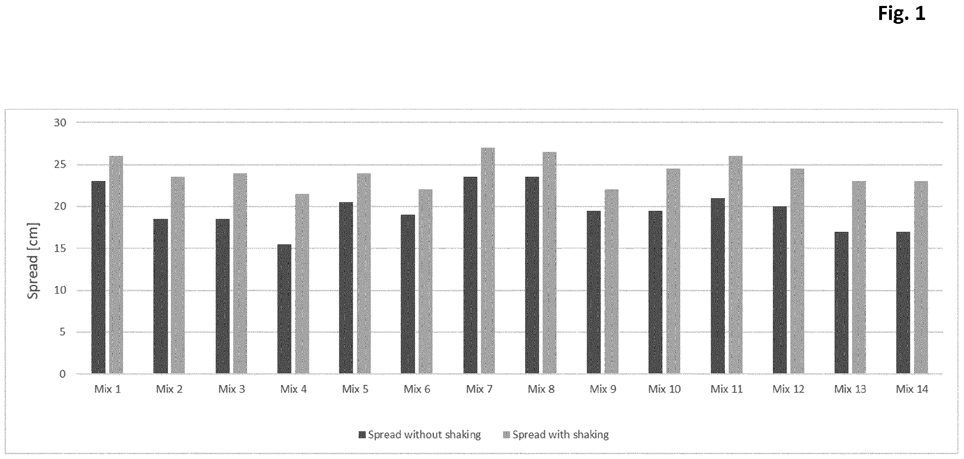

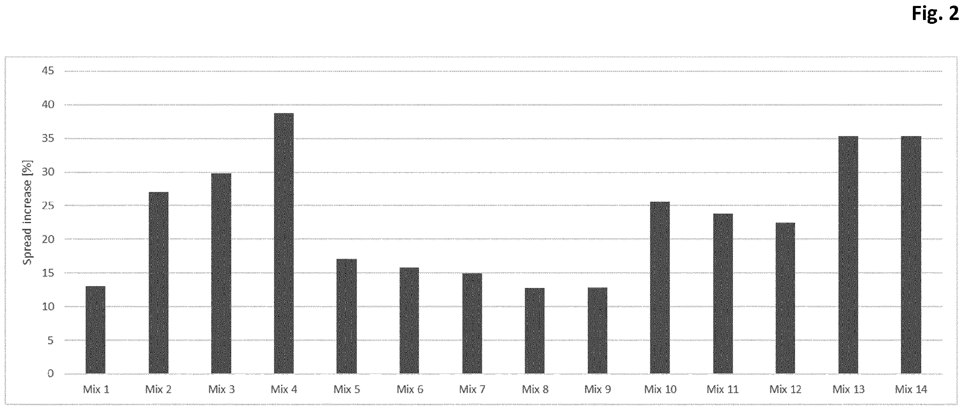

1350 g standard sand according to DIN EN 480-13 was placed in a mixing bowl. 540 g of cement was added. The components were mixed with an electric mixer for 30 s. Over the course of 30 s the residual components as aqueous solution containing the components as listed in Table 1.1 and Table 1.2 were added to the stirred sand/cement mixture. The mixing was subsequently continued for one minute, followed by a pause of 1 minute and an additional mixing of one minute. The final mixture was then added to a flow mold with a bottom radius of 5 cm placed on a flow table. The excess material was leveled off. The flow mold was lifted, and the diameter of the resulting cake was measured. This gave the spread before shaking (see Table 3). The flow table was then raised and dropped 12.5 mm 15 times in 15 seconds and the diameter of the mortar cake was measured again and gave the spread after shaking (Table 3). The data are shown in Figure 1. The spread increase as defined above is depicted in Figure 2.

Table 3: Measured spreads before and after shaking.

|  | Spread before shaking [cm] | Spread after shaking [cm] |
| --- | --- | --- |
| Mix 1 | 23 | 26 |
| Mix 2 | 18,5 | 23,5 |
| Mix 3 | 18,5 | 24 |
| Mix 4 | 15,5 | 21,5 |
| Mix 5 | 20,5 | 24 |
| Mix 6 | 19 | 22 |
| Mix 7 | 23,5 | 27 |
| Mix 8 | 23,5 | 26,5 |
| Mix 9 | 19,5 | 22 |
| Mix 10 | 19,5 | 24,5 |
| Mix 11 | 21 | 26 |
| Mix 12 | 20 | 24,5 |
| Mix 13 | 17 | 23 |
| Mix 14 | 17 | 23 |

Example 2

350 g standard sand according to DIN EN 480-13 and 1000 g gravel (Gravel 2/8 purchased from Schwenk) was placed in a mixing bowl. 540 g of cement was added. The components were mixed with an electric mixer for 30 s. Over the course of 30 s an aqueous solution containing 216.5 g water, 2.6 g liquefier and 6 g of 5 g/l beta glucan containing fermentation broth were added to the stirred sand/cement mixture. The mixing was subsequently continued for one minute, followed by a pause of 1 minute and an additional mixing of one minute. The final mixture was then added to a flow mold with a bottom radius of 5 cm placed on a flow table. The excess material was leveled off. The flow mold was lifted, and the diameter of the resulting cake was measured. The spread increase was 28 %.

Example 3

1350 g standard sand according to DIN EN 480-13 was placed in a mixing bowl. 540 g of cement was added. 60 mg of a 60 % melanin containing dry biopolymer cement additive was added to the mixing bowl. The components were mixed with an electric mixer for 30 s. Over the course of 30 s an aqueous solution containing 216.5 g water and 2.6 g PCE added to the stirred sand/cement mixture. The mixing was subsequently continued for one minute, followed by a pause of 1 minute and an additional mixing of one minute. The final mixture was then added to a flow mold with a bottom radius of 5 cm placed on a flow table. The excess material was leveled off. The flow mold was lifted, and the diameter of the resulting cake was measured. The spread increase was 33 %.

**Claims**

1. Biopolymer cement additive which allows a spread increase of at least 20% when admixed to a concrete or mortar product comprising a beta-glucan with a molecular weight distribution with a maximum of from 0.1 to 5.0 Million Dalton (MegaDalton).

2. Biopolymer cement additive according to any of the foregoing claims, wherein the beta-glucan has been produced by a fungus belonging to the genus *Aureobasidium.*

3. Biopolymer cement additive according to any of the foregoing claims, wherein the biopolymer cement additive is a dry composition and further contains from 10 to 80 wt.-% melanin.

4. Biopolymer cement additive according to any of the foregoing claims, wherein the additive is a liquid formulation containing from 85 to 99.9 wt.-% water and from 0.1 to 15 wt.-% of the beta-glucan with a molecular weight distribution with a maximum of from 0.1 to 5.0 Million Dalton (MegaDalton).

5. Biopolymer cement additive according to claim 4 containing from 0.05 to 10 g/l melanin.

6. Biopolymer cement additive according to any of claims 4 or 5, wherein the pH value of the liquid formulation is selected from the range of from pH 2 to pH 8.

7. Biopolymer cement additive according to any of claims 4 to 6, containing one or more metal ions selected from the group consisting of Al3+, Fe3+, Ca2+, Mg2+ and Mn2+ in a concentration of from 1 to 100 mmol.

8. Biopolymer cement composition containing the biopolymer cement additive according to any of claims 1 to 3.

9. Biopolymer cement composition according to claim 8, wherein the cement is hydraulic or non-hydraulic cement.

10. Biopolymer cement composition according to claim 9, wherein the hydraulic cement is Portland cement.

11. Biopolymer cement composition according to any of claims 8 to 10, wherein the composition further contains at least one component selected from the group consisting of fillers such as silica sand, quartz sand, quartz flour, calcium carbonate, dolomite, aluminum silicates, talc or mica, or light weight fillers such as pumice, foamed glass, aerated concrete, perlites or vermiculites; alkali metal hydroxides and/or alkaline earth metal hydroxides such as zinc oxide, zinc hydroxide and zinc hydroxide carbonate; accelerators such as lithium carbonate or tartaric acid; defoamers; liquefiers; dispersants; or mixtures thereof.

12. Biopolymer cement composition according to any of claims 8 to 11, wherein the biopolymer cement additive is present in a concentration of from 0.0005 to 0.1 wt.-%.

13. Biopolymer cement composition according to any of claims 8 to 12, wherein the biopolymer cement composition contains from 0.001 to 0.1 wt.-% (weight $KAl(SO_4)_2 x 12H_2O$ to weight biopolymer cement composition) $KAl(SO_4)_2 x 12H_2O$.

14. Biopolymer cement composition according to any of claims 8 to 13, wherein the biopolymer composition contains from 0.0005 to 5 wt.-% of a clay mineral.

15. Biopolymer cement composition according to any of claims 14, wherein the composition contains from 0.0005 to 0.005 wt.-% of the biopolymer cement additive according to any of claims 1 to 3 and from 0.0005 to 0.005 wt.-% of a clay mineral selected from sheet silicates selected from the group consisting of halloysite $(Al_2Si_2O_5(OH)_4)$, kaolinite $(Al_2Si_2O_5(OH)_4)$, illite $((K,H_3O)(Al,Mg,Fe)_2(Si,Al)_4O_{10}[(OH)_2,(H2O)])$, montmorillonite $((Na,Ca)_{0.33}(Al,Mg)_2Si_4O_{10}(OH)_2 \cdot nH_2O)$, vermiculite $((MgFe,Al)_3(Al,Si)_4O_{10}(OH)_2 \cdot 4H_2O)$, talc $(Mg_3Si_4O_{10}(OH)_2)$,

sepiolite ($Mg_4Si_6O_{15}(OH)_2 \cdot 6H_2O$), attapulgite (($Mg,Al)2Si_4O_{10}(OH) \cdot 4(H_2O)$), pyrophyllite ($Al_2Si_4O_{10}(OH)_2$) and mixtures thereof.

**16.** Biopolymer cement composition according to any of claims 14 or 15, wherein the ratio of the concentration of the biopolymer cement additive to the concentration of the clay mineral is selected from the range of from 1:9 to 9:1 and wherein the total concentration of the biopolymer cement additive and the clay mineral within the biopolymer cement composition is from 0.0005% to 0.1 wt.-%.

**17.** Process for the production of concrete or mortar comprising the steps

(a) providing from 100 to 10000kg sand and/or gravel;
(b) addition of from 2.5 to 40 wt.-% (weight of cement to weight sand and/or gravel) cement to the sand and/or gravel;
(c) addition of from 3 to 20 wt.-% (weight of water to total weight of sand and/or gravel and cement)
(d) of water to the sand and/or gravel; and cement;
(e) addition of from 0.001 to 0.1 wt.-% (weight of biopolymer to total weight of water, sand and/or gravel and cement)
(f) of the biopolymer cement additive according to any of claims 4 to 7; to the sand and/or gravel; cement and water;
(g) mixing components (a) to (d) for a time period of from 5 minutes to 5 hours.

**18.** Process for the production of concrete or mortar comprising the steps

(a) providing from 100 to 10000kg sand and/or gravel;
(b) addition of from 2.5 to 40 wt.-% of the biopolymer cement composition according to any of claims 8 to 16 to the sand and/or gravel;
(c) addition of from 3 to 20 wt.-% of water to the sand and/or gravel; and biopolymer cement composition;
(d) mixing components (a) to (d) for 5 minutes to 5 hours.

**19.** Process for the production of concrete or mortar comprising the steps

(f) providing from 100 to 10000kg sand and/or gravel;
(g) addition of from 2.5 to 40 wt.-% cement to the sand and/or gravel;
(h) addition of from 0.00001 to 0.001 wt.-% of the biopolymer cement additive according to any of claims 1 to 3; to the sand and/or gravel; and cement;
(i) addition of from 3 to 20 wt.-% of water to the sand and/or gravel; cement and biopolymer cement additive;
(j) mixing components (a) to (d) for a time period of from 5 minutes to 5 hours.

**20.** Use of the biopolymer cement additive according to any of claims 1 to 7 for the production of a biopolymer cement composition or the production of concrete or mortar.

Fig. 1

EP 3 792 230 A1

**Fig. 2**

Europäisches
Patentamt

European
Patent Office

Office européen
des brevets

# EUROPEAN SEARCH REPORT

**Application Number**

EP 19 19 6798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/140744 A1 (BIOPOLYMER ENGINEERING INC DBA [US]; COX DONALD J [US]) 20 November 2008 (2008-11-20) * page 6, paragraph 2; claim 11 * ----- | 1-7 | INV. C04B28/04 C04B40/00 C04B24/38 |
| X | US 5 174 821 A (MATSUOKA YASUNORI [JP] ET AL) 29 December 1992 (1992-12-29) * abstract; claim 9; table 1 * ----- | 8-20 | |
| A | US 9 938 550 B1 (HUANG CHIAO-YING [TW] ET AL) 10 April 2018 (2018-04-10) * the whole document * ----- | 1-20 | |

**TECHNICAL FIELDS SEARCHED (IPC)**

C04B

The present search report has been drawn up for all claims

| Place of search | Date of completion of the search | Examiner |
|---|---|---|
| Munich | 2 March 2020 | Roesky, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 19 6798

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2020

| Patent document cited in search report | | Publication date | Patent family member(s) | | | Publication date |
|---|---|---|---|---|---|---|
| WO 2008140744 | A1 | 20-11-2008 | AU | 2008251847 | A1 | 20-11-2008 |
| | | | BR | PI0811274 | A2 | 07-10-2014 |
| | | | CA | 2690918 | A1 | 20-11-2008 |
| | | | CN | 101711112 | A | 19-05-2010 |
| | | | CN | 105310078 | A | 10-02-2016 |
| | | | CO | 6251216 | A2 | 21-02-2011 |
| | | | EP | 2155000 | A1 | 24-02-2010 |
| | | | JP | 5562837 | B2 | 30-07-2014 |
| | | | JP | 6007209 | B2 | 12-10-2016 |
| | | | JP | 2010526810 | A | 05-08-2010 |
| | | | JP | 2014198045 | A | 23-10-2014 |
| | | | JP | 2016198108 | A | 01-12-2016 |
| | | | KR | 20100029193 | A | 16-03-2010 |
| | | | KR | 20140105620 | A | 01-09-2014 |
| | | | MY | 150220 | A | 31-12-2013 |
| | | | UA | 101617 | C2 | 25-04-2013 |
| | | | US | 2009036401 | A1 | 05-02-2009 |
| | | | US | 2012065157 | A1 | 15-03-2012 |
| | | | US | 2013237497 | A1 | 12-09-2013 |
| | | | WO | 2008140744 | A1 | 20-11-2008 |
| US 5174821 | A | 29-12-1992 | NONE | | | |
| US 9938550 | B1 | 10-04-2018 | CN | 108118003 | A | 05-06-2018 |
| | | | JP | 2018088909 | A | 14-06-2018 |
| | | | TW | 201821611 | A | 16-06-2018 |
| | | | US | 9938550 | B1 | 10-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2882804 A
- EP 2018165787 A